# EUROPEAN PATENT APPLICATION

(11) **EP 4 800 160 A1**
(43) Date of publication of application: **02.09.2026**
(21) Application number: 25161020.0
(22) Date of filing: 28.02.2025
(51) Int. Cl.: C25B 9/19, C25B 9/60, C25B 9/73, C25B 9/77, C25B 15/08, H01M 8/0258

(54) **FLUID-DIRECTING STRUCTURE**

(71) Applicant: Phlair GmbH, 85737 Ismaning (DE)
(72) Inventor: DANIEL, Mark, 85737 Ismaning (DE); SIGMUND, Daniel, 85737 Ismaning (DE); BIESER, Felix, 85737 Ismaning (DE)
(74) Representative: Wallinger Ricker Schlotter PartGmbB

(57) **Abstract**

A fluid-directing structure for an electrochemical cell, the fluid-directing structure comprising or consisting of a first planar plate, a second planar plate being arranged parallel to the first planar plate, and a plurality of wall elements extending from a direction perpendicular to said first and second planar plate, connecting the first and the second planar plate and defining a plurality of fluid flow channels together with the first and second planar plates, the flow fluid channels being configured for directing a fluid, wherein each of the wall elements of the plurality of wall elements is bent.

## Description

### TECHNICAL FIELD OF THE INVENTION

The invention relates to a fluid-directing structure for an electrochemical cell, the fluid-directing structure comprising or consisting of a first planar plate, a second planar plate being arranged parallel to the first planar plate, and a plurality of wall elements extending from a direction perpendicular to said first and second planar plate, connecting the first and the second planar plate and defining a plurality of fluid flow channels together with the first and second planar plates, the flow fluid channels being configured for directing a fluid, wherein each of the wall elements of the plurality of wall elements is bent. The present invention also relates to an electrochemical cell or an assembly of a plurality of electrochemical cells comprising at least one fluid-directing structure at a fluid inlet and/or fluid outlet. Moreover, the present invention further relates to a method of producing an electrochemical cell or an electrochemical cell assembly including the step of positioning a fluid-directing structure at a fluid inlet and/or fluid outlet of an electrochemical cell or at least one electrochemical cell of the electrochemical cell assembly. Furthermore, the present invention relates to the use of a fluid-directing structure for insertion or output of a fluid.

### BACKGROUND OF THE INVENTION

The increase in greenhouse gas emissions has led to a global rise in temperature, causing climate change and its devastating effects. Carbon dioxide (CO₂) is the main greenhouse gas contributing to this phenomenon. Reducing CO₂ emissions is crucial to limiting global warming, but this may not be enough to achieve the Paris climate goals.

Capturing of carbon dioxide is a key step in carbon abatement strategies and is a process in which CO₂ is removed from the atmosphere using various technologies. There are various approaches, including adsorption, absorption and electrochemical capture.

Typically, an electrochemical cell can produce an alkaline solution for capturing the carbon dioxide as a carbonate, e.g. in an absorber, and - at the same time - said electrochemical cell can be used for producing an acid for re-obtain carbon dioxide by reaction with carbonate and storage of carbon dioxide.

For large industrial production, scaling of those cells is necessary to drive down costs. The active area of the cells and the number of cells on a small space need to be increased. Therefore, electrochemical cells are usually combined in series to give an electrochemical stack.

One of the major problems in an electrochemical cell or an electrochemical stack is the distribution of fluids, such as liquid and/or gas, to the electrodes without loss or cross-leakage of reactants such as fluids. Many of these problems are minimised in the prior art by using a two-piece injection moulded channel insert that is effectively incompressible with channels of fixed dimension. For electrodialysis this is solved in the prior art¹ through a rigid polymer sealing that would take up the force. In the case of the hydrolyser a comparably softer 2-dimensional profile cut Ethylene Propylene Diene Monomer (EPDM) sealing layer is used due to cost considerations, reusability in the R&D process and compressible flexibility that allows minor movement and adjustment of stack height parameters. However, the channel gaps required to feed the compartments from the manifolds do not provide any means to transfer force to the adjacent membranes or gaskets below and above and in turn the sealing element that they interface with.

Thus, there remains a desire for improved performance properties within electrochemical cells or an electrochemical stack including improved sealing and fluid, such as liquid and/or gas, transport within the cell. Therefore, a fluid-directing structure for an electrochemical cell which is suitable to avoid leakage in between the membranes or gasket material that would ultimately manifest as an internal leak and act as a fluid, such as liquid and/or gas, conduit under compression to the relevant cell compartment is needed.

In view of the state of the art and its disadvantages, the technical problem underlying the present invention can be seen as the provision of improved means and methods that provide both a fluid conduit and a force transfer mechanism to enable sealing between two cell compartments.

This technical problem has been solved by the subject-matter of the claims, as demonstrated by the Examples.

### SUMMARY OF THE INVENTION

The above-mentioned objective technical problem is solved by the present invention as reflected in the independent claims and the corresponding aspects disclosed herein.

Generally, and by way of brief description, the main aspects of the present invention can be described as follows:
In a first aspect, the present invention provides a fluid-directing structure for an electrochemical cell, the fluid-directing structure comprising or consisting of a first planar plate, a second planar plate being arranged parallel to the first planar plate, and a plurality of wall elements extending from a direction perpendicular to said first and second planar plate, connecting the first and the second planar plate and defining a plurality of fluid flow channels together with the first and second planar plates, the flow fluid channels being configured for directing a fluid, wherein each of the wall elements of the plurality of wall elements is bent.
¹ https://www.fullstarxm.com/custom-made-factory-supply-plastic-electradialysis-spacer-for-electradialysis-system_p282.html

In a second aspect, the present invention provides an electrochemical cell or an assembly of a plurality of electrochemical cells comprising at least one fluid-directing structure according to the first aspect arranged at a fluid inlet and/or fluid outlet.

In a third aspect, the present invention provides a method of producing an electrochemical cell or an electrochemical cell assembly including the step of positioning the fluid-directing structure according to the first aspect at a fluid inlet and/or fluid outlet of an electrochemical cell or at least one electrochemical cell of the electrochemical cell assembly.

In a fourth aspect, the present invention provides a use of a fluid-directing structure according to the fist aspect in an electrochemical cell or an electrochemical cell assembly for insertion or output of a fluid.

### DEFINITIONS

The following definitions apply to the terms and features as well as expressions used in the present disclosure.

Unless otherwise stated, all technical terms used herein correspond to common technical understanding.

The term "fluid-directing structure", as used herein, is a component used to control, guide or manage the flow of fluids, such as liquid and/or gas, within an electrochemical cell or an electrochemical cell assembly. This structure is essential in ensuring that fluids are distributed efficiently and effectively through various cell compartments, which is critical for optimizing performance, and ensuring safety. One of the primary functions is to ensure that the fluids flow evenly across or into different compartments of the cell. These structures can help maintain or regulate the pressure and flow rate of fluids, such as liquid and/or gas.

The term "electrochemical cell", as used herein, is to be understood broadly in the present case. This includes all electrochemical cells which are suitable for producing an acidic component and thus an acidic aqueous solution, as well as an alkaline aqueous solution.

The terms "electrolytic cell" (or electrolyser) and "electrolysis" are to be understood broadly in the present case. In particular, both terms include any electrochemical conversion, especially oxidation at the anode and reduction at the cathode, which is forced using a voltage source.

As used herein, an "assembly of electrochemical cells" is to be understood broadly and typically a stacking of electrochemical cells in order to scale up the performance for industrial purposes, such as carbon dioxide capturing.

The term "planar plate", as used herein, refers to a flat, two-dimensional surface or structure. The term "planar" indicated the plate is flat and extends in two directions like a flat surface.

The term "arranged parallel" as used herein, has its art-established meaning, and refers to a component or plate positioned in such a way that they are aligned along parallel lines or plate, maintaining an equal distance between them. The parallel arrangement ensures that each component or plate follows the same direction and orientation, without converging or diverging from one another. The components or plates are aligned to maintain a consistent direction. For instance, if two plates are arranged parallel to each other, their surfaces are aligned to each other, their surfaces are aligned in the same plane and oriented in the same direction.

The term "wall elements" as used herein, refers to a thin, flat, two-dimensional structural element that forms part of a larger system, preferably a fluid-directing structure. It represents a fundamental component or segment of the fluid-directing structure that plays a role in the overall structure integrity, and functionality of the fluid-directing structure. The wall elements are designed to provide structural support, and/or separating spaces to form channels. A wall element in a fluid-directing structure refers to a component within a system designed to control, guide, or direct the flow of fluids, such as liquid and/or gas. These wall elements are essential in shaping the paths that fluids and/or gases take, ensuring efficient flow, preventing unwanted mixing of the fluids, such as liquid and/or gas, and optimizing the performance of the fluid-directing structure.

The term "fluid flow channels", as used herein, refers to pathways or conduits through which fluids, such as liquid and/or gas, can move in a fluid-directing structure. The channels are flow paths that are not enclosed in the fluid-directing structure, allowing the fluid and/or gases to flow along a surface. The channels ensure efficient flow, preventing unwanted mixing of the fluids and/or gases and optimizing the performance of a fluid-directing structure.

The term "bent", as used herein, refers to the action of shaping or curving an object, preferably a wall element, typically by applying force to create an angle or a deviation from a straight line. The term bent describes the physical deformation or change in shape of the object such as a wall element.

The term "monolithic structure", as used herein, refers to a type of construction or design where the entire fluid-directing structure, preferably the first planar plate, the second planar plate and the plurality of wall elements is made from a single, unified material or formed as a single piece, without joints, seams, or separate components. The term "monolithic" refers to a solid, continuous mass.

The term "a row parallel to each other", as used herein, has its art-established meaning, and refers to a group of fluid flow channels that are arranged in a straight line, with each item oriented in the same direction and positioned at equal distances from one another, without any deviation. The fluid flow channels of the plurality of fluid flow channels are parallel, meaning they are aligned in such a way that the run in the same direction and will never intersect, no matter how far extended.

The term "C-type cross-sectional shape", as used herein, refers to a profile that resembles the letter "C", when viewed in cross-section. The profile of the wall elements of the fluid-directing structure looks like the letter "C", meaning it has an open side, forming a gap. The C-shape has two vertical sides (or legs) that are parallel to each other. The ends of the C may be slightly rounded.

The term "circular-type shape" as used herein, refers to a cross-sectional shape that is round, where all points on the boundary are equidistant from a central point. The circular-type shape is perfectly round, with no corners or edges. Every point on the circumference has the same distance (the radius) from the centre.

The term "angular-type cross-sectional shape" refers to a profile that has sharp angles or corners, as opposed to smooth curves. The term typically refers to shapes that are not rounded but have defined edges with clear, sharp transitions between different faces. The shape includes one or more straight edges that meet at an angle, forming corners. These angles can vary, such as right angles (90°) or other acute or obtuse angles. Angular sections can be polygons, for example triangles, squares, or more complex multi-sided shapes, with distinct straight edges.

The term" middle-axis" as used herein, refers to the central line that runs through the fluid-directing structure, dividing it symmetrically (or nearly symmetrically). The fluid-directing structure is designed to be symmetric about its middle axis to ensure uniform flow distribution.

Ther term "outlet" as used herein, refers to the point where the fluid, such as liquid and/or gas, exits the respective compartment of an electrochemical cell. The fluid outlet transfer fluid, such as liquid and/or gas, out of the compartment of the electrochemical cell. Fluid outlets remove by-products, gases, or liquids that result from the electrochemical reactions taking place inside the cell. These outlets can also help in managing the flow of electrolytes, products, or reactants that need to be removed or recycled during operation.

Ther term "inlet" as used herein, refers to the point where the fluid, such as liquid and/or gas enters the respective compartment of an electrochemical cell. The flow of the fluid is essential for generating the chemical reactions. The fluid inlet allows for the regulation of flow rates and pressures, which can affect the efficiency and stability of the electrochemical reactions.

The term "guiding tab" as used herein, refers to a last wall element of the plurality of wall elements being positioned at an edge of the first and the second planar plates of the fluid-directing structure.

The term "vertical path" as used herein, refers to a straight direction along a vertical axis. The vertical path moves along a y-axis in a two-dimensional or three-dimensional space. It is a direction that is perpendicular to the horizontal direction, for example the x-axis in a two-dimensional space.

The term "the mechanical requirements" in the context of an electrochemical cell refers to the relative stiffness that the fluid-directing structure needs for transferring the force to adjacent wall elements and to maintain the structural integrity of the part. The mechanical requirements essentially act as a structural element of the system and replicate (or as best as possible) the compression function that an adjacent solid flow frame section would provide. The component needs to be designed to achieve sufficient stiffness while under deflection due to compression. The exact mechanical requirements or deflection characteristics of the part can vary depending on the cell assembly design and the elements in the assembly. Different cell compartment thicknesses, sealing materials, and their deflection properties are some factors that can influence the mechanical requirements for the fluid-directing structure.

Ther term "surrounding components" in the context of an electrochemical or an electrochemical cell assembly, refers to components comprising the cell compartment flow frames made of Polypropylene (PP) and Ethylene Propylene Diene Monomer (EPDM) layers.

The term "two-dimensional profile cut features", as used herein, refers to the cutouts in the surrounding components comprising the cell rigid Polypropylene (PP) flow frames and Ethylene Propylene Diene Monomer (EPDM) sealing gaskets where the fluid-directing structure of the invention is located.

### BRIEF DESCRIPTION OF THE FIGURES

The present invention is now further described by reference to the following figures.

All methods mentioned in the figure descriptions below were carried out as described in detail in the examples.
Figure 1 shows a schematic cross-sectional view of a fluid-directing structure for an electrochemical cell.
Figure 2A shows a schematic top view of a fluid-directing structure for an electrochemical cell.
Figures 2B and C show a schematic side view of a fluid-directing structure for an electrochemical cell.
Figure 3 shows schematic cross-sectional view of alternative designs of a fluid-directing structure with different shapes of the wall elements and guide tabs.
Figure 4A shows a schematic of a fluid-directing structure in an uncompressed state (a) and compressed state (b).
Figure 4B shows an enlarged schematic view of parts of the fluid-directing structure in an uncompressed state (a) and compressed state (b).
Figure 5 shows a schematic isometric view of a single electrochemical cell (A) and an electrochemical cell assembly (B) showing the fluid-directing structure positioned in at an inlet and outlet of an anode compartment.
Figure 6A shows a schematic isometric view of an electrochemical cell assembly showing the fluid-directing structure positioned at an inlet and outlet of an anode compartment, centre compartment, and cathode compartment.
Figure 6B shows enlarged views of the fluid-directing structure positions at an inlet and outlet of an anode compartment, centre compartment, and cathode compartment in an electrochemical cell assembly.
Figure 7A shows a schematic isometric view of an individual electrochemical cell showing the fluid-directing structure positions at an anode compartment, centre compartment, and cathode compartment.
Figure 7B shows a schematic top view of an individual electrochemical cell showing the fluid-directing structure positions at an anode compartment, centre compartment, and cathode compartment.
Figure 7C shows enlarged views of fluid-directing structure positions at an anode compartment, centre compartment, and cathode compartment in an individual electrochemical cell.
Figure 8 shows a side image of a test device of an electrochemical cell assembly comprising the fluid-directing structure showing the the fluid-directing structure before compression (A), and after compression (B).
Figure 9 shows also a side image of a test device of an electrochemical cell assembly comprising the fluid-directing structure showing the the fluid-directing structure before compression (A), and after compression (B).
Figure 10 shows a top view of different designed fluid-directing structures as shown in FIG. 3 and the corresponding Catalyst Coated Membrane (CCM) fill layers after a compression test.

### DETAILED DESCRIPTION

### Fluid-directing structure

Embodiments mentioned in context with the first aspect of the invention hereinbelow are combinable among each other unless indicated otherwise.

In a first aspect, the invention relates to a fluid-directing structure for an electrochemical cell, the fluid-directing structure comprising or consisting of a first planar plate, a second planar plate being arranged parallel to the first planar plate, and a plurality of wall elements extending from a direction perpendicular to said first and second planar plate, connecting the first and the second planar plate and defining a plurality of fluid flow channels together with the first and second planar plates, the flow fluid channels being configured for directing a fluid, wherein each of the wall elements of the plurality of wall elements is bent.

The invention provides a fluid-directing structure for an electrochemical cell. The invention can be utilized with any electrochemical cell which utilizes a conductive fluid. In an example, the fluid comprises liquid and/or gas.

In one example, the electrochemical cell can, for example, be an electrolytic cell with three compartments - the anode compartment, intermediate compartment and cathode compartment - as described, for example, in DE 10 2022 122 837B3 or DE 10 2023 109 225.1.

In a further example, the fluid-directing structure of the invention can be utilized with an assembly of a plurality of electrochemical cells.

A fluid-directing structure for an electrochemical cell or an assembly of a plurality of electrochemical cells can control, guide or manage the flow of fluids, such as liquid and/or gas, within an electrochemical cell. This structure is essential in ensuring that fluids, such as liquid and/or gas, are distributed efficiently and effectively through various cell compartments, which is critical for optimizing performance, and ensuring safety.

The plurality of fluid flow channels is defined by a plurality of wall elements arranged between the first upper planar plate and the second lower planar plate, wherein each of the wall elements is bent or curved, for example curved as arcs, to form a flow through area, i.e. a channel. For example, the wall elements can have a compliant arc structure. The plurality of fluid flow channels can transmit the reactants such as fluids, such as liquid and/or gas, between the fluid-directing structure and the relevant cell compartment of the electrochemical cell.

These plurality of bent wall elements arranged in series are advantageous because such bent wall elements deflect under load and transfer the force by a force transfer mechanism through to the wall elements which in turn distribute the load to adjacent elements that enable the critical sealing to occur between its local cell compartment and the adjacent ones. In addition, the fluid-directing structure of the invention provides a sealed structure in order to act as a working fluid, such as liquid and/or gas, conduit from the fluid-directing structure to the relevant cell compartment of an electrochemical cell. Due to the bent wall elements, the fluid-directing structure of the invention has compressibility/compliance properties.

By designing fluid-directing structure for low-cost and flexible manufacturing methods, e.g. a simple linear plastic extrusion process, fundamental design or dimensional changes are fast and easy to make.

In one embodiment, the first planar plate, the second planar plate and the plurality of wall elements form monolithic structure.

A monolithic structure in the context of a fluid-directing structure refers to a continuous, unified single-piece design, where the fluid-directing structure is constructed as a single entity to avoid seams or joints that might create weak points. The monolithic structure has greater strength due to being a single continuous piece. In addition, the continuous nature of a monolithic structure provides more consistent fluid distribution and better performance of a fluid-directing structure due to fewer places for leaks.

In one embodiment, the monolithic structure is obtainable by extrusion, 3D-printing or plastic injection moulding.

A monolithic structure can be created by low-cost methods comprising extrusion, 3D-printing or plastic injection moulding. Theses manufacturing processes allow for creating solid and continuous shapes of a fluid-directing structure.

Extrusion involves forcing material, for example plastics or metals, through a mould or die to create a continuous shape of uniform cross-section. Extrusion allows for long, and continuous production runs to produce a monolithic structure in a seamless and unbroken manner. Extrusion is a cost-effective method, especially for mass production, and provides design flexibility for specific applications.

3D-printing builds up a part layer by layer based on a digital design, typically using materials like plastics or metals. 3D-printing provides the ability to produce complex shapes and geometries.

Injection moulding involves injecting molten plastic into a mould, where it cools and solidifies into the final part. This method is typically used for mass production of small to medium-sized components with complex shapes.

In one embodiment, the fluid-directing structure is essentially being composed of a polymer selected from the group consisting of polyphenylene sulfide (PPS), polypropylene (PP), and polytetrafluoroethylene (PTFE), polyetheretherketone (PEEK), polyethelene (PE), polyvinylidene difluoride (PVDF), and combinations thereof. In one embodiment, the fluid-directing structure is preferably composed of polyphenylene sulfide (PPS), and more preferably composed of polypropylene (PP).

In one example, when operating in an aggressive pH value as low as about 0.5 and as high as about 13.5, the fluid-directing structure can essentially be composed of a polymer selected from the group consisting of polyphenylene sulfide (PPS), polypropylene (PP), and polytetrafluoroethylene (PTFE), polyetheretherketone (PEEK), polyethelene (PE), polyvinylidene difluoride (PVDF), and combinations thereof.

In one example, at least two polymers selected from the group consisting of polyphenylene sulfide (PPS), polypropylene (PP), and polytetrafluoroethylene (PTFE), polyetheretherketone (PEEK), polyethelene (PE), and polyvinylidene difluoride (PVDF) can be combined, for example using 3D-printing.

In one embodiment, the fluid-directing structure is essentially being composed of a metal selected from the group consisting of titanium, nickel-based alloys, polytetrafluoroethylene coated metals, gold, and combinations thereof.

In one example, when operating in an aggressive pH value as low as about 0.5 and as high as about 13.5, the fluid-directing structure can essentially be composed of a metal selected from the group consisting of titanium, nickel-based alloys, polytetrafluoroethylene coated metals, gold, and combinations.

In one example, at least two metals selected from the group consisting of titanium, nickel-based alloys, polytetrafluoroethylene coated metals, and gold can be combined. In a further example, the fluid-directing structure can be essentially composed of an alloyed metal. Further, the fluid-directing structure can be essentially composed by layering different metals selected from the group consisting of titanium, nickel-based alloys, polytetrafluoroethylene (PTFE) coated metals, and gold on top of each other metal separately (but not fused together) to form a fluid-directing structure. In one embodiment, the fluid-directing structure is preferably composed of titanium, more preferably composed of nickel-based alloys coated with PTFE. A fluid-directing structure composed of nickel-based alloys coated with PTFE can ensure long term electrochemical compatibility.

In an additional example, when operating with less aggressive or relatively neutral chemistries in a pH range between about 6 to about 8, the fluid-directing structure can essentially be composed of plastics selected from the group consisting of Polyethylene terephthalate (PET), Nylon, Polycarbonate (PC), Polyvinyl chloride (PVC), Polylactic acid (PLA), Acrylonitrile Butadiene Styrene (ABS), and Acetal.

In one embodiment, the fluid flow channels of the plurality of fluid flow channels are arranged in a row parallel to each other and parallel to the first and second planar plates.

The plurality of fluid flow channels arranged in series between the upper first planar plate and the lower planar second plate provide resistance to compression of the fluid-directing structure. After compression of the fluid-directing structure, the plurality of fluid flow channels between the upper first planar plate and the lower planar second plate remain open to allow fluid and/or gas to move between the fluid-directing structure and the relevant cell compartment, for example anode compartment, centre compartment, and/or cathode compartment, of the electrochemical cell.

In one embodiment, each of the plurality of wall elements are bent such that they have a C-type cross-sectional shape, a circular-type shape or such that they have an angular-type cross-sectional shape.

In one example, each of the plurality of wall elements can be arranged in series of arcs between the upper first planar plate and the lower planar second plate.

Wall elements having a C-type cross-sectional shape refer to a profile that resembles the letter "C", when viewed in cross-section. In other words, a wall element having a C-type cross-sectional shape has an open side and form a gap. The C-shape of the wall element has two vertical sides (or legs) that are parallel to each other. The ends of the C may be slightly rounded. The advantage of a wall element having a C-type cross-sectional shape is characterised by its strength and versatility.

Wall elements having a circular-type shape refer to a cross-sectional shape that is round, where all points on the boundary are equidistant from a central point. The circular-type shape is perfectly round, with no corners or edges. In other words, every point on the circumference has the same distance (the radius) from the centre. The wall element having a circular-type shape offers the most efficient use to space within a given area.

Wall elements having an angular-type cross-sectional shape refer to a profile that has sharp angles or corners, as opposed to smooth curves. The angular-type cross-sectional shape is not rounded but has defined edges with clear, sharp transitions between different faces. The shape includes one or more straight edges that meet at an angle, forming corners. These angles can vary, such as right angles (90°) or other acute or obtuse angles. Angular sections can be polygons, for example triangles, squares, or more complex multi-sided shapes, with distinct straight edges. The edges of the shape are straight and can be easily measured for dimensions like length, width, and height. The advantage of a wall element having an angular-type cross-sectional shape is characterised by strength, rigidity, and resistance to bending or twisting.

The plurality of wall elements arranged in series between the upper first planar plate and the lower planar second plate provide resistance to compression. The plurality of wall elements deflects under load and transfer the force through to the first and second planar plates which in turn distribute the load to adjacent wall elements that form a sealing barrier.

In one embodiment, a first sub-plurality of the plurality of bent wall elements are bent into a first direction parallel to the first and second planar plate and a second sub-plurality of the plurality of bent wall elements are bent into second direction parallel to the first and second planar plates, wherein the second direction is the opposite direction of the first direction.

In one embodiment, the first sub-plurality of bent wall elements is arranged at a first half of the fluid-directing structure, the first half being arranged next to a middle axis, the middle axis being perpendicular to the first and second planar plates, and the second sub-plurality of the plurality of bent wall elements are arranged at a second half of the fluid-directing structure, the second half being arranged next to the middle axis.

In one embodiment, a last wall element of the plurality of wall elements is positioned at an edge of the first and the second planar plates, wherein the last wall element of the plurality of wall elements is a guiding tab configured to keep the fluid-directing structure during compression on a vertical path.

The last wall elements of the plurality of wall elements can be vertical guide tabs configured to hold the fluid-directing structure in place at its location in the electrochemical cell, for example at a fluid inlet and/or fluid outlet of a cell compartment.

When in an uncompressed state and the insert is placed into its location, the guide tabs are long enough so that they extend past an upper and lower Ethylene Propylene Diene Monomer (EPDM) sealing layers that make up the relevant cell compartment, for example anode compartment, centre compartment, and/or cathode compartment of the electrochemical cell along with the centre rigid layer of the relevant compartment. The EPDM sealing layers sit on either side of a rigid PP (Polypropylene) flow frame layer. This "sandwich" configuration is repeated in each compartment within the cell. The rigid PP (Polypropylene) flow frame layer sits between two EPDM layers. This three-layer configuration forms a single compartment within the cell. The guide tabs now adjacent to the rigid element of the compartment of which will act as a guide for the tabs.

The last wall elements of the plurality of wall elements, i.e. the guide tabs, ensure that during compression the fluid-directing structure cannot undergo asymmetric deformation, i.e. tilting to one side, as the rigid layer will keep the fluid-directing structure on a vertical displacement path, i.e. on a straight direction along a vertical axis. The term "during compression" may refer to a research or production process of an electrochemical cells or an assembly of electrochemical cells, when all the cells of an assembly of a plurality of electrochemical cells have been assembled together as well as its first planar plate and second planar plate, the assembly is compressed as a single assembly under a hydraulic press. The assembly of a plurality of electrochemical cells is compressed to a target height which will achieve the critical compression needed on the active layers inside. The fluid-directing structure will undergo deformation and conform to this pressing process.

For instance, the installation of the fluid-directing structure requires only a simple two-dimensional profile cut geometry in the surrounding components to locate the fluid-directing structure in place and without the need to be clipped in. The surrounding components comprises the cell compartment flow frames made of polypropylene (PP) and Ethylene Propylene Diene Monomer (EPDM) rubber layers. The simple two-dimensional profile cut features of the surrounding components creates the internal features that house and locate the electrochemical cell active materials and the fluid-directing structure. The two-dimensional profile cut features have a shape, for example a rectangle or square shape, that match the shape of the fluid-directing structure, so that the fluid-directing structure can be assembled easily into the surrounding components and can interact with the guide tabs. When in place, the fluid-directing structure has minimal ability to move and there may be minor friction present with the edges of the simple two-dimensional profile cut features in the surrounding components.

In one embodiment, the plurality of channels has a number ranging from 5 to 12.

The number of channels, i.e. the flow areas, will determine the pressure drop or resistance that the incoming and outgoing fluid, such as liquid and/or gas, flow will have to overcome. The higher the resistance, i.e. more flow through area restriction, when accounted for over an assembly of a plurality of electrochemical cells will result in a higher pumping power being required to supply the electrochemical cells with electrolyte. The requirements for each design of an assembly of a plurality of electrochemical cells can be very different. The allowable pressure drop of a cell can vary greatly due to a multitude of factors. If the dimensions of the fluid-directing structure are limited but need to achieve sealing integrity, the pumping pressure requirements may be increased as a trade-off due to needing more structural elements in the flow path. However, minimising the energy required to move the fluid, such as liquid or gas, through the assembly of a plurality of electrochemical cells is always a focus. Ideally this is a balance between the number of wall elements, the force distribution they provide, and the amount of flow area they take away from the channel. The term "balance", as used herein should be thought of as being driven primarily by sealing functionality for a given channel geometry. To achieve the optimal balance for a given set of design and system constraints, an iterative design and test process is required here.

In one example, the fluid-directing structure is configured to be compressed to a ratio of about 1:20 to about 1:3 in a direction perpendicular to the first and second planar plates. In a further example, the fluid-directing structure is configured to be compressed to a minimum ratio of about 1:20 to about 1:15.

The compression ratio is dependent on material, structural design and the thickness of the cell compartment layer. In one example, the assembly of a plurality of electrochemical cells compression is a function of the fluid-directing structure resistance and the sealing elements used. The sealing elements can be Ethylene Propylene Diene Monomer (EPDM) rubber layers, elastomers such as Santoprene, a form of EPDM in a thermoplastic matrix, or polytetrafluoroethylene (PTFE). The fluid-directing structure essentially acts as a structural element of the system and replicates the compression function that an adjacent solid flow frame section would provide. The fluid-directing structure needs to be designed to achieve sufficient stiffness while under deflection due to compression. The exact mechanical requirements or deflection characteristics of fluid-directing structure can vary depending on the assembly design and the elements in the assembly. Different cell compartment thicknesses, sealing materials, and their deflection properties are some factors that can influence the mechanical requirements for the fluid-directing structure. In other words, the fluid-directing structure of the invention can be tuned by design to the mechanical requirements.

In one example, the width to span ratio for a compressed condition of a channel is about 1.5:1.

The ratio of the channel width to depth of channel is limited by the minimum gap that can exist between the first and second planar plates. If the minimum final gap is defined to be 0.5 mm then the channel would yield a maximum width to depth ratio of about 7:1.

In one example, the fluid-directing structure can be thermally bond or by other means, two edges of the fluid-directing structure to a Polypropylene compartment frame in order to make the cell stack building process simpler and faster compared to installing the fluid-directing structure one by one during the cell assembly process.

### Electrochemical cell

In a second aspect, the invention relates to electrochemical cell or an assembly of a plurality of electrochemical cells, the electrochemical cell or the assembly of electrochemical cells comprising at least one fluid-directing structure according to the first aspect of the invention arranged at a fluid inlet and/or fluid outlet.

The electrochemical cell can, for example, be an electrolytic cell with three compartments - the anode compartment, intermediate compartment and cathode compartment - as described, for example, in DE 10 2022 122 837B3 or DE 10 2023 109 225.1. Such an electrochemical cell can also have an electrodialysis cell with a bipolar membrane (BPM). Furthermore, an electrochemical cell may comprise an electrolyser or electrolysis cell as described in PCT/US2022/076642, PCT/EP2023/055467, and PCT/EP2022/055430, respectively.

The anode compartment, the centre compartment and/or the cathode compartment of the electrochemical cell may include a fluid inlet and/or fluid outlet. In one example, the anode compartment, the centre compartment and/or the cathode compartment of the electrochemical cell comprises at least one fluid inlet and/or at least one fluid outlet.

For instance, at least one fluid-directing structure can be arranged at the fluid inlet and/or fluid outlet of an anode compartment, a cathode compartment and/or a centre compartment of an electrochemical cell. In one example, the electrochemical cell comprises at least one fluid-directing structure for each fluid inlet of the anode compartment, intermediate compartment and cathode compartment, and at least one fluid-directing structure for each fluid outlet of the anode compartment, intermediate compartment and cathode compartment.

For example, the location for the fluid-directing structure is a captive rectangular pocket formed by the layers of the respective cell compartment of the electrochemical cell.

In a further example, two fluid-directing structures are required for each cell compartment including the anode compartment, the intermediate compartment and/or the cathode compartment of an electrochemical cell. For instance, if the electrochemical cell comprises 3 cell compartments, i.e. an anode compartment, an intermediate compartment and a cathode compartment, a total of 6 fluid-directing structures are required per electrochemical cell. In other words, an assembly of a plurality of electrochemical cells with n cells will require n x 6 fluid-directing structures.

In one example, an assembly of a plurality of electrochemical cells may involve 2 to 100 electrochemical cells, being arranged next to each other as a stacking of plurality of these cells. In a preferred example, the assembly may involve 2 to 50 electrochemical cells, more preferably the assembly may involve 20 to 40 cells.

Since the cells components are stacked together, such a plurality of electrochemical cells is typically known as a cell stack. The individual cells usually are flowed through in parallel to one another by the electrolytes, while the electrochemical cells are usually electrically connected in series. Construction of a plurality of electrochemical cells as a cell stack operating in a series arrangement offers a number of advantages in terms of efficient space and material utilization and permits fluid-directing structures to be an integral part.

Significant factors in the design of such a cell stack are the method of construction and thickness of the individual cells. To reduce Capital Expenditures and Operational Expenditures, the electrochemical cells in an assembly are intended to be as thin as possible. To achieve high linear flow within an assembly of a plurality of electrochemical cells, the educt and the product need to go through a shared fluid-directing structure of the invention that feeds all equal cell compartments connecting at least one fluid inlet with at least one fluid outlet of the respective cell compartment for transporting fluids. In an example, the fluid comprises liquid and/or gas.

In one example, the fluid-directing structure of the invention is particularly applicable to a stack frame construction that is made up of simple 2-dimensional profile cut components and where the stack itself may require some flexibility in compression for research or production purposes. A stack frame construction refers to the way in which a cell is manufactured. More specifically, how components are manufactured so that they are simple, can be changed quickly and easily to assist in the cell stack development process. Two-dimensionally cut components are the simplest way to construct an electrochemical cell compartment flow frame and iterate on the design quickly. Being able to rapidly change the geometry of any design aspect helps to understand what the active area the electrochemical cell needs to be, what inlet and outlet geometries are required and various other aspects that you want to refine. A completely new design of cell compartment or minor adjustments to existing part designs can be achieved in a matter of hours versus weeks or months and at a fraction of the cost compared to other development methods such as early commitment to injection molded flow frames. Manufacturing 3-dimensional feature flow frames with integrated sealing elements via injection molding is a target solution but the simplified 2-dimensional part development path provides exceptionally fast development times with less risk. The resulting cell stack can also be used as a functional product if required.

Furthermore, it is known that for efficient and reliable cell performance, sealing the incoming and outgoing fluids, such as liquid and/or gas, against the environment and the cell compartments in which they are not intended to end up must be achieved to prevent undesirable and potentially damaging paths for leakage between the membranes or gasket material.

An electrochemical cell or an assembly of electrochemical cells comprising at least one fluid-directing structure of the invention has the advantage that the fluid-directing structure seal the incoming and outgoing fluids, preferably liquid and/or gas, against the environment and the cell compartments in which they are not intended to end up. Furthermore, a fluid-directing structure will provide a force transfer mechanism to enable the critical sealing to occur between its local cell compartment and the adjacent ones. Due to the compressibility properties, the fluid-directing structure is capable of meeting the cell stack displacement requirements under compression while maintaining a flow path from the fluid-directing structure to the cell compartment. After its compression in the cell stack manufacturing process, the channels of the fluid-directing structure remain open to allow fluids, such as liquid and/or gas, to move between the fluid-directing structure and the relevant cell compartment. This is achieved using wall elements in the fluid-directing structure of the invention which deflect under load and transfer the force through to the first and second plates which in turn distribute the load to adjacent wall elements that form a sealing barrier.

The unique aspect of the fluid-directing structure in an electrochemical cell or an assembly of electrochemical cells is in the compressibility/compliance due to the bent plurality of wall elements and that it can adjusted easily to meet the mechanical requirements of electrochemical cell or an assembly of electrochemical cells.

Further, the fluid-directing structure of the first aspect simplifies construction of an assembly of electrochemical cells using two-dimensional profile cut components. The invention enables the inflow and outflow of fluids, such as liquid and/or gas, into the assembly of electrochemical cells while providing a structural element that fills the entry and exit cut in the 2-D component and transfers the necessary force for compressing adjacent sealing elements.

In one embodiment, the electrochemical cell or an assembly of a plurality of electrochemical cells is an electrolyser comprising
- an anode compartment,
- a centre compartment, and
- a cathode compartment, wherein
the centre compartment is disposed between the anode compartment and the cathode compartment, the anode compartment is connected to the centre compartment via a first transport membrane, the cathode compartment is connected to the centre compartment via a second transport membrane, and the cathode compartment is connected to the centre compartment via a second transport membrane; and the at least one fluid-directing structure according to the first aspect of the present invention is configured to supply fluids, such as liquid and/or gas, to the respective compartment of the electrochemical cell directing the fluids, such as liquid and/or gas.

In other words, such electrochemical cell can comprise a first transport membrane at the anode compartment and a second transport membrane at the cathode compartment both defining the centre compartment therebetween. In the alternative, such electrochemical cell can comprise a first transport membrane at the anode compartment and a separator at the cathode compartment both defining the centre compartment therebetween.

First and second transport membranes disclosed herein may both be cation exchange membranes. Such membranes are known to the skilled person and for example are disclosed in DE 10 2023 109 225 B3, which is incorporated herein by reference.

The mode of action of the of the electrochemical cell is briefly explained. At an anode material within the anode, hydrogen gas is oxidized into a proton according to equation (1) below:

*H*₂ → 2 *H⁺ +* 2 *e⁻ E*⁰ *=* 0*V* (1)

H*⁺* may for example be present in an aqueous solution as H₃O⁺_{(aq)} or be present as a part of a solid electrode and/or membrane material. The actual form of the acidic oxidation product H*⁺* is not critical as long as it is available to be transported through the first transportation membrane into the centre compartment in which the mesh is arranged.

Therefore, the anode compartment may contain anode materials suitable for oxidizing hydrogen gas into and transport it into the first transport membrane into the centre compartment. Suitable anode materials are known to the skilled person and for example are disclosed in DE 10 2023 109 225 B3, which is incorporated herein by reference.

In the cathode compartment, typically water or an aqueous solution entering an inlet of the cathode compartment is reduced to produce hydrogen and hydroxide, as formally shown below in equation (2) using the example of sodium as a cation, while other cations are also possible:

*H*₂*O* + 2 *Na*⁺ + 2*e⁻* → *2 NaOH + H*₂ *,E*⁰ = -0.83 *V @ pH =* 14 (2)

Typically, the hydrogen is transferred to the anode compartment, e.g. with a conduit, while the hydroxide can exit an outlet of the cathode compartment to serve as a capturing solution for carbon dioxide as explained hereinbelow.

The cathode compartment includes a cathode material. Suitable cathode materials are known to the skilled person and for example are disclosed in DE 10 2023 109 225 B3, which is incorporated herein by reference.

In one example, the fluid-directing structure according to the first aspect of the invention is inserted in the electrochemical cell at the interface between the relevant cell compartment inlet and outlet channels and their respective manifold.

In one example, in assembly of a plurality of electrochemical cells, the fluid-directing structure is the common inflow and outflow tube formed by the individual layers in the stacking process and which connects all the similar compartments from each electrochemical cell in the assembly of a plurality of electrochemical cells.

Embodiments and technical effects of the first aspect which are not disclosed in this section but also relate to the fluid-directing structure for an electrochemical cell equally apply for this section and are not repeated for the sake of conciseness.

### Method of producing an electrochemical cell

In a third aspect, the invention relates to a method of producing an electrochemical cell or an electrochemical cell assembly including the step of positioning the fluid-directing structure according to the first aspect at a fluid inlet and/or fluid outlet of an electrochemical cell or at least one electrochemical cell of the electrochemical cell assembly.

For example, each compartment of an electrochemical cell may include a fluid inlet and/or fluid outlet. In one example, the anode compartment, the centre compartment and/or the cathode compartment of the electrochemical cell comprises at least one fluid inlet and at least one fluid outlet. For instance, at least one fluid-directing structure can be arranged at the fluid inlet and/or fluid outlet of an anode compartment, a cathode compartment and/or a centre compartment of an electrochemical cell. In one example, the electrochemical cell comprises at least one fluid-directing structure for each fluid inlet of the anode compartment, intermediate compartment and cathode compartment, and at least one fluid-directing structure for each fluid outlet of the anode compartment, intermediate compartment and cathode compartment.

In an example, the fluid comprises liquid and/or gas.

In a further example, the fluid-directing structure will be positioned in a captive rectangular pocket formed by the layers of the respective cell compartment of the electrochemical cell.

Embodiments and technical effects of the first or second aspect which are not disclosed in this section but also relate to the fluid-directing structure for an electrochemical cell equally apply for this section and are not repeated for the sake of conciseness.

### Use of a fluid-directing structure

In a fourth aspect, the invention relates to the use of a fluid-directing structure according to the first aspect in an electrochemical cell or an electrochemical cell assembly for insertion or output of a fluid.

In an example, the fluid comprises liquid and/or gas.

The effects of using the fluid-directing structure have already been extensively discussed and will not be repeated for the sake of conciseness.

Embodiments and technical effects of the first to third aspect which are not disclosed in this section but also relate to the fluid-directing structure for an electrochemical cell equally apply for this section and are not repeated for the sake of conciseness.

It will be appreciated, that the use of the singular article "a" or "the" within this document is not meant to limit the scope of the invention expect if specifically stated. That is, generally "a" may also refer to more than one. In other words, "a" can generally be read as "at least one".

The term "at least one", as used herein, shall include at least 1, at least 3, at least 4, at least 5, at least 6, at least 7, at least 8, at least 9, at least 10, at least 11, at least 12, at least 13, at least 14, at least 15, at least 16, at least 17, at least 18, at least 19, at least 20, or any other number.

The terms "of the (present) invention", "in accordance with the invention", "according to the invention" and the like, as used herein, are intended to refer to all aspects and embodiments of the invention described and/or claimed herein.

In the context of the present invention, the terms "about" and "approximately" denote an interval of accuracy that the person skilled in the art will understand to still ensure the technical effect of the feature in question. The term typically indicates deviation from the indicated numerical value by ±20%, ±15%, ±10%, and for example ±5%. As will be appreciated by the person of ordinary skill, the specific such deviation for a numerical value for a given technical effect will depend on the nature of the technical effect.

As regards the embodiments characterized in this specification, in particular in the claims, it is intended that each embodiment mentioned in a dependent claim is combined with each embodiment of each claim (independent or dependent) said dependent claim depends from. For example, in case of an independent claim 1 reciting 3 alternatives A, B and C, a dependent claim 2 reciting 3 alternatives D, E and F and a claim 3 depending from claims 1 and 2 and reciting 3 alternatives G, H and I, it is to be understood that the specification unambiguously discloses embodiments corresponding to combinations A, D, G; A, D, H; A, D, I; A, E, G; A, E, H; A, E, I; A, F, G; A, F, H; A, F, I; B, D, G; B, D, H; B, D, I; B, E, G; B, E, H; B, E, I; B, F, G; B, F, H; B, F, I; C, D, G; C, D, H; C, D, I; C, E, G; C, E, H; C, E, I; C, F, G; C, F, H; C, F, I, unless specifically mentioned otherwise.

Similarly, and also in those cases where independent and/or dependent claims do not recite alternatives, it is understood that if dependent claims refer back to a plurality of preceding claims, any combination of subject-matter covered thereby is considered to be explicitly disclosed. For example, in case of an independent claim 1, a dependent claim 2 referring back to claim 1, and a dependent claim 3 referring back to both claims 2 and 1, it follows that the combination of the subject-matter of claims 3 and 1 is clearly and unambiguously disclosed as is the combination of the subject-matter of claims 3, 2 and 1. In case a further dependent claim 4 is present which refers to any one of claims 1 to 3, it follows that the combination of the subject-matter of claims 4 and 1, of claims 4, 2 and 1, of claims 4, 3 and 1, as well as of claims 4, 3, 2 and 1 is clearly and unambiguously disclosed.

### DETAILED DESCRIPTION OF THE FIGURES

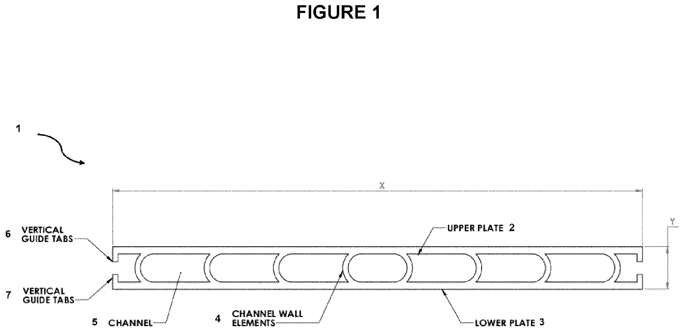

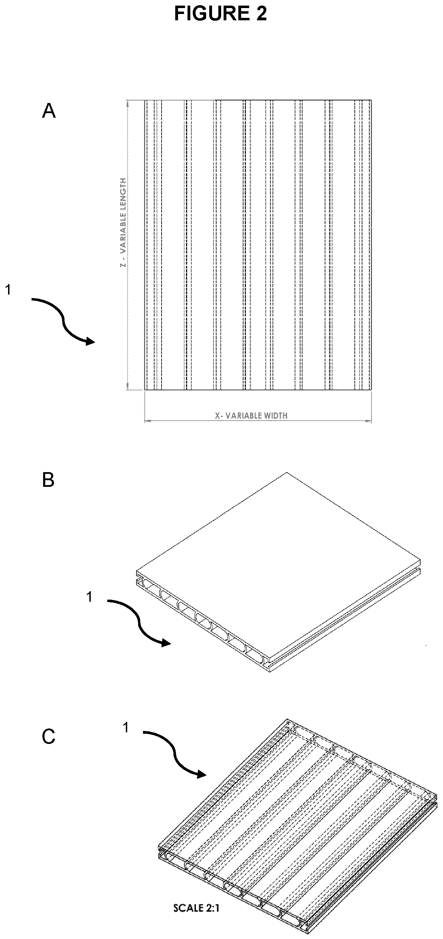

FIG. 1 and 2 show a fluid-directing structure (1) for an electrochemical cell (8). The fluid-directing structure comprising or consisting of a first upper planar plate (2) and a second lower planar plate (3). The second lower planar plate is arranged parallel to the first planar plate (2). A plurality of channel wall elements (4) extending from a direction perpendicular to said first and second planar plate (2, 3). The plurality of channel wall elements (4) connecting the first and the second planar plate (2, 3) and defining a plurality of fluid flow channels (5) together with the first and second planar plates (2, 3). The flow fluid channels (5) are configured for directing a fluid, wherein each of the wall elements (4) of the plurality of wall elements is bent.

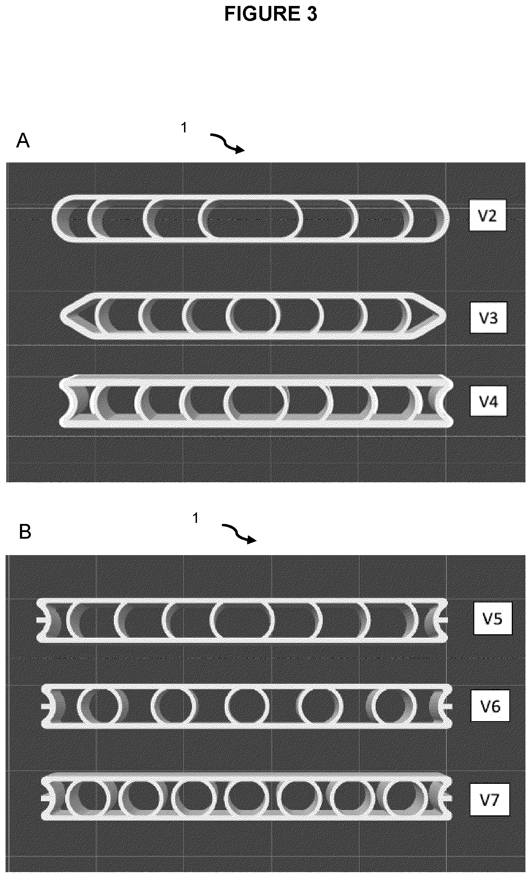

FIG. 3 shows different designs of the wall elements (4) and guide tabs (6, 7) of a fluid-directing structure (1). The wall elements (4) are bent such that they have a C-type cross-sectional shape, a circular-type shape or such that they have an angular-type cross-sectional shape. Each of the plurality of wall elements (4) are arranged in series of arcs or circles between the upper first planar plate (2) and the lower planar second plate (3). The guide tabs (6, 7) can have different shapes to locate the fluid-directing structure (1) in place and without clipping.

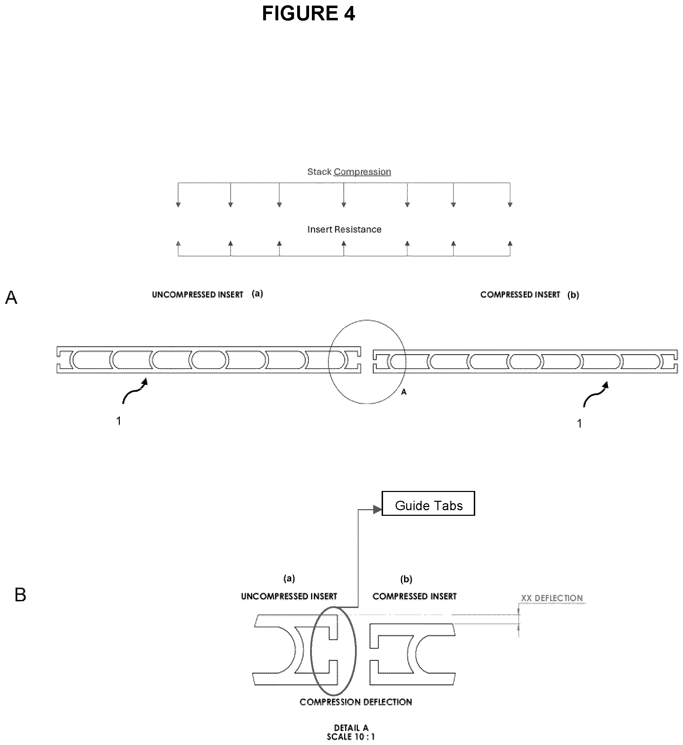

FIG. 4 shoes the fluid-directing structure (1) for an electrochemical cell (8) in an uncompressed state (a) and in a compressed state (b).

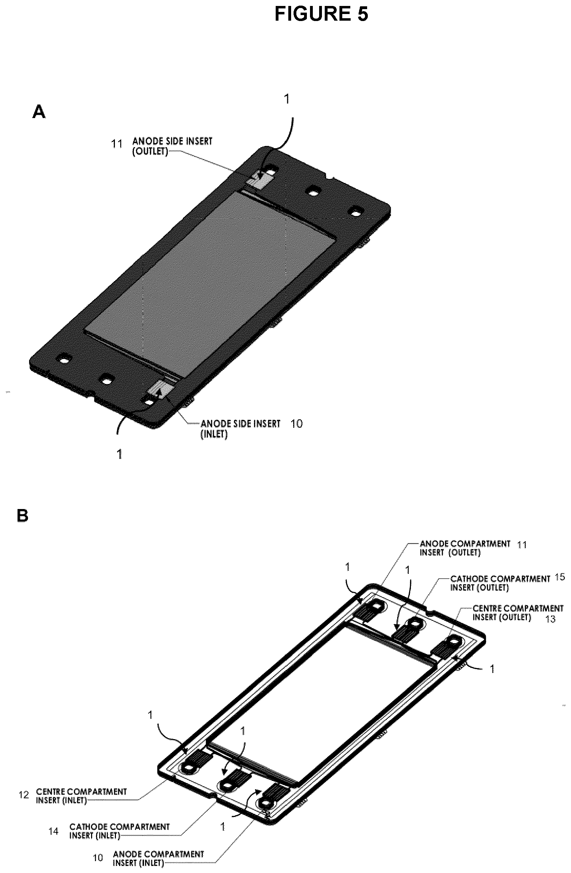

FIG. 5 shows a single electrochemical cell (8) and an electrochemical cell assembly (9) comprising a fluid-directing structure (1). FIG.5A shows an electrochemical cell (8) comprising two fluid-directing structures (1) located at the anode compartment outlet (11) and at the anode compartment inlet (10). FIG.5B shows an electrochemical cell assembly (9) comprising six fluid-directing structures (1) located at the anode compartment inlet (10) and outlet (11), at the cathode compartment inlet (14) and outlet (15), and at the centre compartment inlet (12) an outlet (13).

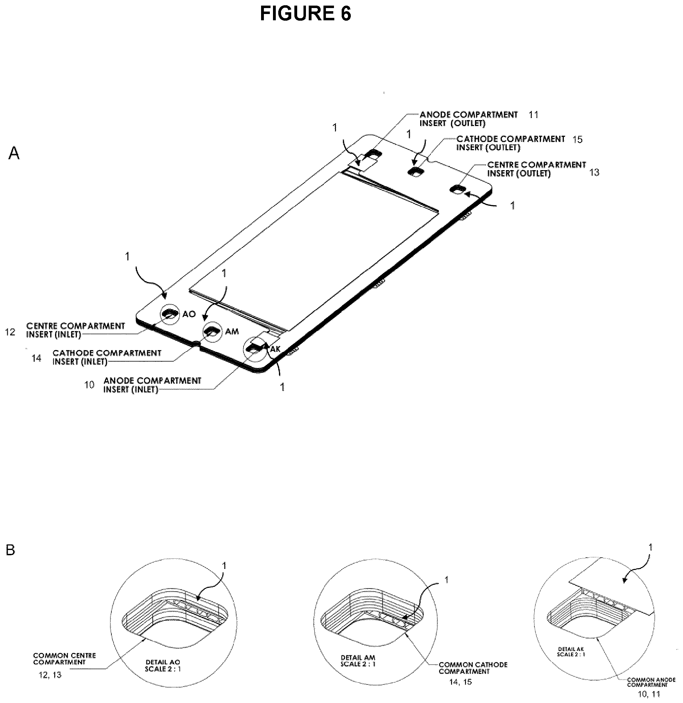

FIG. 6 shows a single electrochemical cell (8) comprising fluid-directing structures (1). The electrochemical cell (8) comprises six fluid-directing structures (1) located at the anode compartment inlet (10) and outlet (11), at the cathode compartment inlet (14) and outlet (15), and at the centre compartment inlet (12) an outlet (13).

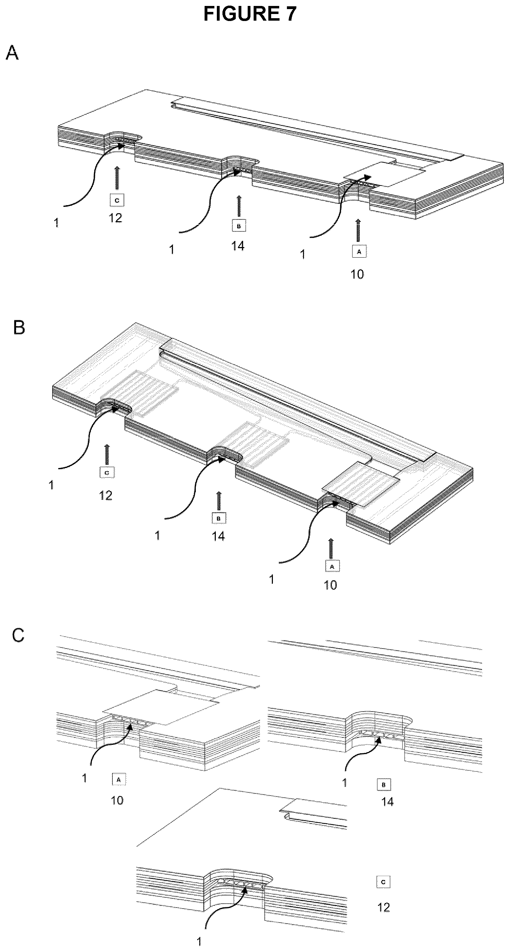

FIG. 7 also shows a single electrochemical cell (8) comprising fluid-directing structures (1) located at the anode compartment (10), at the cathode compartment (14), and at the centre compartment (12).

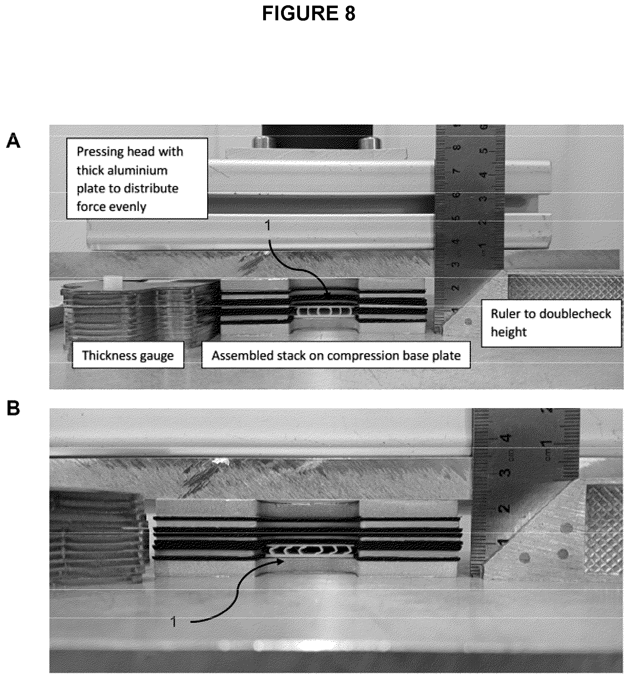

FIG. 8 shows an experimental setup with a test device. The test device comprises a pressing head with thick aluminium plate to distribute force evenly, a thickness gauge, a ruler to do check the high, and an electrochemical cell assembly (9) comprising the fluid-directing structures (1) on a compression base plate. FIG. 8A shows the fluid-directing structure (1) in the test device before compression. FIG. 8B shows the fluid-directing structure (1) in the test device after compression.

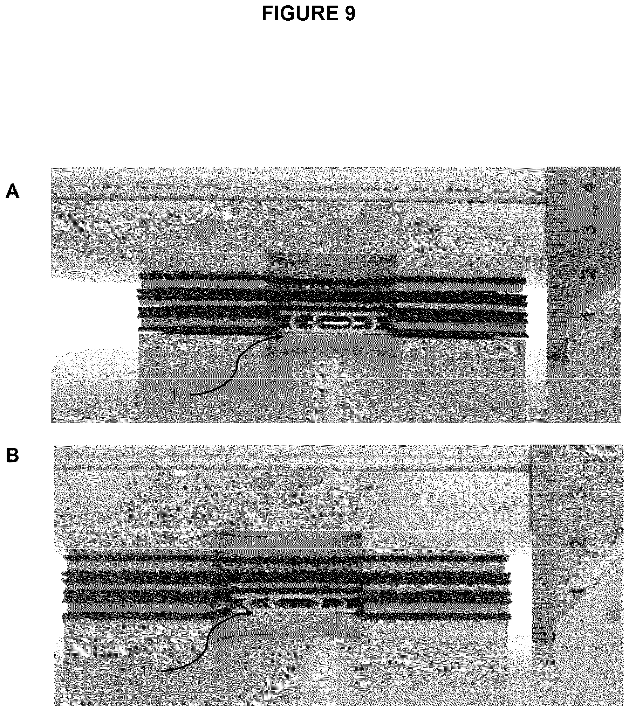

FIG. 9 also shows also the experimental setup with the test device. The test device comprises the fluid-directing structure (1) for electrochemical cell assembly (9) before compression (A), and after compression (B).

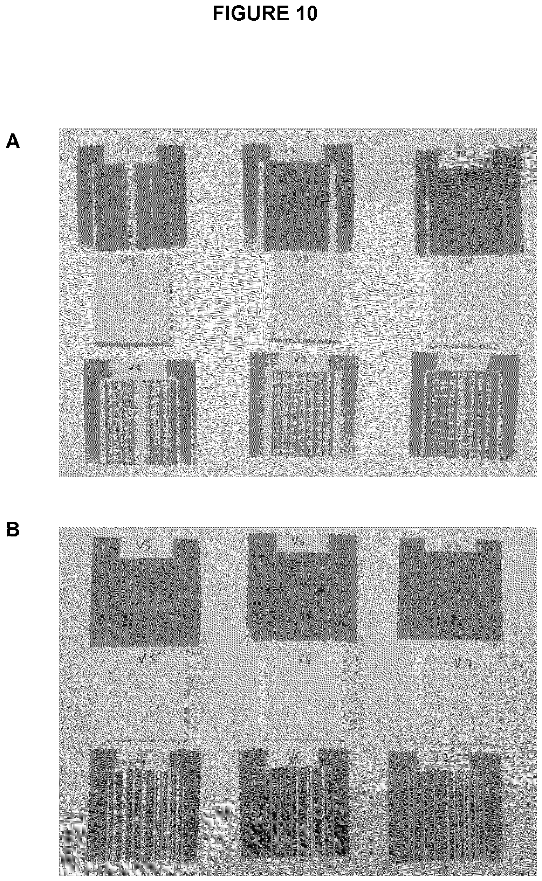

FIG. 10 shows the results of the comparison of the pressure distribution of different versions (V) of the wall elements (4) and guide tabs (6, 7) of a fluid-directing structure (1) as shown in FIG. 3 (V2-V7). The different versions V2-V7 are the result of the experimental setup shown on FIG. 8 and FIG. 9. To determine the pressure distribution a pressure sensitive film (Fuji Film) was used. The film was placed between the fluid-directing structure (1) and the sealing EPDM layer on top and between the fluid-directing structure (1) and a rigid aluminium plate on the bottom. The (red) coloured areas on the films have seen pressure more than 0,6 MPa. The not coloured areas didn't activate and indicate that there was no pressure on the interacting layers. The films placed above the fluid-directing structure (1) are critical ones, since they show where on the EPDM sealing layer was no pressure. Versions V2, V3 and V4 of a fluid-directing structure (1) show a clear line, where no pressure was applied. This can relate to a leak in the real product. Versions V5, V6 and V7 of a fluid-directing structure (1) show a very good pressure distribution, which means there are no gaps and inactivated areas. Based on those results, geometries of versions V5, V6 and V7 of a fluid-directing structure (1) were considered to use in an electrochemical cell assembly (9).

### EXAMPLES

In the following, reference is made to the examples, which are given to illustrate, not to limit the present invention.

### Example 1

Several designs of fluid-directing structures are tested to evaluate their behaviour while compressing and how they can ensure a safe transmission of the pressing force inside the electrochemical cell assembly's and between the cells in larger assemblies. A chemically compatible 3D Printing filament is PPS (polyphenylene sulfide).

Initially three fluid-directing structure designs are tested on a small-scale prototype to simulate one cell lay-up (FIG. 3A; V1, V2, and V3). The fluid-directing structures are made of standard PLA (Polylactic Acid).

All tests were performed according to the assembly drawing representing the electrochemical cell consisting of rigid Polypropylene plastic sheets and EPDM sealing layers. To evaluate pressure distribution a pressure sensitive film was used (Pressure Measurement Prescale Film LLLW form Company FUJIFILM Europe GmbH, called Fuji Film²). This film can precisely measure pressure, pressure distribution, and pressure balance. Red patches will appear on the film when pressure over 0,6 MPa is applied. In addition to the Fuji Film underneath the fluid-directing structure facing a rigid aluminium plate a second Fuji Film on top, between the fluid-directing structure and the CCM fill layer (plastic sheet), was added to analyse the pressure distribution between these components.

### Example 2

A feature (guiding tabs) on the right and left end was added to fit the fluid-directing structure geometrically defined in the cut out of the Polypropylene (PP) cathode insert layer (FIG.3B; V5, V6,
² https://www.fujifilm.com/de/en/business/inspection/measurement-film/prescale and V7). Another change is a variation of the flow channel geometry to analyze the impact of the stiffness.

### Compression Test

### (1) Test Preparation

Before building the electrochemical cell assembly, every part was cleaned and placed on a clean surface to exclude errors caused by dirt.

### (2) Calculation of Compression and target heights

To perform the testing as comparable as possible every fluid-directing structure and fully built test cell assembly was measured before compression. With these numbers a target compression height was calculated according to this numbers:

| | |
|---|---|
| • Measured fluid-directing structure height before compression | *H_{I}* |
| • Measured Cell Assembly Height before compression | *H_{A}* |
| • Target Height fluid-directing structure | *T_{I}* = 4*mm* |
| • Compression | *C* = *H_{I} -* 4*mm* |
| • Target Height Cell Assembly | *T_{A} = H_{A} - C* |

The following table 1 documents the height measurements and calculated heights for each compression.

**Table 1**

| **Insert Version** | **V2** | **V3** | **V4** | **V5** | **V6** | **V7** |
|---|---|---|---|---|---|---|
| ***H_{I}* (mm)** | 5,65 | 5,45 | 5,45 | 5,46 | 5,42 | 5,47 |
| ***H_{A}* (mm)** | 24,8 | 24,35 | 24,35 | 24,29 | 24,31 | 24,43 |
| ***T_{I}* (mm)** | 4 | 4 | 4 | 4 | 4 | 4 |
| ***C* (mm)** | 1,65 | 1,45 | 1,45 | 1,46 | 1,42 | 1,47 |
| ***T_{A}* (mm)** | 23,15 | 22,9 | 22,9 | 22,83 | 22,89 | 22,96 |

The procedure building up the assembly was the same for all versions and is divided into the following steps:
1. Cut Fuji Film for all 3 tests
2. Measure fluid-directing structures heights and document
3. All parts prepared and cleaned
4. Start building according to drawing, pressure paper between printed insert and aluminum plate and between fluid-directing structure and CCM fill layer
5. Measure cell assembly height and document
6. Calculate Target Height or compression
7. Prepare thickness gauge to the target height
8. Move to small hydraulic press and prepare experimental setup
9. Perform compression to target height and document with pictures
10. Release pressure
11. Disassemble and document with pictures
12. Move on and repeat the procedure with the next fluid-directing structure version

### (3) Results - Comparison of the pressure distribution

The test device of Fuji Fil pressure distribution was documented with pictures (FIG.8 and 9). FIG.9A documented the fluid-directing structure in a test device before compression, and FIG.9B documented the fluid-directing structure after compression.

Fluid-directing structures V3 and V4 show a very good pressure distribution where the force is transferred, but there is still a gap and not activated area (FIG. 10A).

Fluid-directing structures V5, V6, and V7 are showing the pressure distribution that is very promising without any potential leak paths (FIG. 10B). The fluid-directing structure V7 is much stiffer and was holding up the structure above. EPDM and PP sheets are bending over the right and left corners. Even with higher force the fluid-directing structure target height (4mm) was not reached.

### REFERENCE SIGNS

- 1: Fluid-directing structure
- 2: First (upper) planar plate
- 3: Second (lower) planar plate
- 4: Wall element
- 5: Channel
- 6: Guide tab
- 7: Guide tab
- 8: Electrochemical cell
- 9: Assembly of a plurality of electrochemical cells
- 10: Anode compartment Inlet
- 11: Anode compartment Outlet
- 12: Centre compartment Inlet
- 13: Centre compartment Outlet
- 14: Cathode compartment Inlet
- 15: Cathode compartment Outlet

## Claims

1. A fluid-directing structure for an electrochemical cell, the fluid-directing structure comprising or consisting of:
• a first planar plate,
• a second planar plate being arranged parallel to the first planar plate, and
• a plurality of wall elements extending from a direction perpendicular to said first and second planar plate, connecting the first and the second planar plate and defining a plurality of fluid flow channels together with the first and second planar plates, the flow fluid channels being configured for directing a fluid, wherein
each of the wall elements of the plurality of wall elements is bent.

2. The fluid-directing structure according to claim 1, wherein the first planar plate, the second planar plate and the plurality of wall elements form monolithic structure.

3. The fluid-directing structure according to claim 2, wherein the monolithic structure is obtainable by extrusion, 3D-printing or plastic injection moulding.

4. The fluid-directing structure according to any one of claims 1 to 3 essentially being composed of a polymer selected from the group consisting of polyphenylene sulfide (PPS), polypropylene (PP), and polytetrafluoroethylene (PTFE), polyetheretherketone (PEEK), polyethelene (PE), polyvinylidene difluoride (PVDF), and combinations thereof.

5. The fluid-directing structure according to any one of claims 1 to 3 essentially being composed of a metal selected from the group consisting of titanium, nickel-based alloys, polytetrafluoroethylene coated metals, gold, and combinations thereof.

6. The fluid-directing structure according to any one of the preceding claims, wherein the fluid flow channels of the plurality of fluid flow channels are arranged in a row parallel to each other and parallel to the first and second planar plates.

7. The fluid-directing structure according to any one of the preceding claims, wherein each of the plurality of wall elements are bent such that they have a C-type cross-sectional shape, a circular-type shape or such that they have an angular-type cross-sectional shape.

8. The fluid-directing structure according to any one of the preceding claims, wherein a first sub-plurality of the plurality of bent wall elements are bent into a first direction parallel to the first and second planar plate and a second sub-plurality of the plurality of bent wall elements are bent into second direction parallel to the first and second planar plates, wherein the second direction is the opposite direction of the first direction.

9. The fluid-directing structure according to any one of the preceding claims, wherein the first sub-plurality of bent wall elements is arranged at a first half of the fluid-directing structure, the first half being arranged next to a middle axis, the middle axis being perpendicular to the first and second planar plates, and the second sub-plurality of the plurality of bent wall elements are arranged at a second half of the fluid-directing structure, the second half being arranged next to the middle axis.

10. The fluid-directing structure according to any one of the preceding claims, wherein a last wall element of the plurality of wall elements is positioned at an edge of the first and the second planar plates, wherein the last wall element of the plurality of wall elements is a guiding tab configured to keep the fluid-directing structure during compression on a vertical path.

11. The fluid-directing structure according to any one of the preceding claims, wherein the plurality of channels has a number ranging from 5 to 12.

12. An electrochemical cell or an assembly of a plurality of electrochemical cells, the electrochemical cell or the assembly of electrochemical cells comprising at least one fluid-directing structure according to any one of claims 1 to 11 arranged at a fluid inlet and/or fluid outlet.

13. The electrochemical cell or an assembly of a plurality of electrochemical cells of claim 12, wherein electrochemical cell is an electrolyser comprising
• an anode compartment,
• a centre compartment, and
• a cathode compartment,
wherein
the centre compartment is disposed between the anode compartment and the cathode compartment, the anode compartment is connected to the centre compartment via a first transport membrane, the cathode compartment is connected to the centre compartment via a second transport membrane, and the cathode compartment is connected to the centre compartment via a second transport membrane; and
the at least one fluid-directing structure is configured to supply a fluid to the respective compartment of the electrochemical cell directing the fluid.

14. A method of producing an electrochemical cell or an electrochemical cell assembly including the step of positioning the fluid-directing structure according to any one of the claims 1 to 11 at a fluid inlet and/or fluid outlet of an electrochemical cell or at least one electrochemical cell of the electrochemical cell assembly.

15. Use of a fluid-directing structure according to any one of claims 1 to 11 in an electrochemical cell or an electrochemical cell assembly for insertion or output of a fluid.
